# EUROPÄISCHE PATENTANMELDUNG

(11) **EP 3 292 900 A1**
(43) Veröffentlichungstag der Anmeldung: **14.03.2018**
(21) Anmeldenummer: 16188341.8
(22) Anmeldetag: 12.09.2016
(51) Int. Cl.: B01D 21/00, B01D 21/24

(54) **VORRICHTUNG ZUM TRENNEN VON FESTEN PARTIKELN AUS EINEM FLÜSSIGEN MEDIUM**

(71) Anmelder: Kimmich, Susanne, 64409 Messel (DE)
(72) Erfinder: Kimmich, Susanne, 64409 Messel (DE)
(74) Vertreter: Quermann, Helmut

(57) **Zusammenfassung**

Die Erfindung betrifft eine Vorrichtung (1) zum Trennen von festen Partikeln aus einem flüssigen Medium, mit einem Behälter (2), der einen unteren, sich nach unten verjüngenden Abschnitt (3) aufweist, einem Rohr (4), das in dem Behälter (2) angeordnet ist und eine Öffnung (5) zum Ausgeben des flüssigen Mediums in den Behälter (2) aufweist, einem Prallkörper (6), der im Bereich der Öffnung (5) angeordnet ist, zum Umlenken des aus der Öffnung (5) austretenden flüssigen Mediums, einem unteren Ausgabebereich (7) unten im Behälter (2) für die festen, relativ schweren Partikel und einem oberen Ausgabebereich (8) oben im Behälter (2) für feste, relativ leichte Partikel und für von festen Partikeln befreites flüssiges Medium.

Bei einer solchen Vorrichtung ist erfindungsgemäß vorgesehen, dass das Rohr (4) ein Steigrohr ist, das im Bereich eines oberen Endes die Öffnung (5) aufweist, oberhalb der Öffnung (5) der Prallkörper (6) angeordnet ist, sowie oberhalb des Prallkörpers (6) eine Einrichtung (9) zum Belüften des von den festen, relativ schweren Partikeln befreiten, die festen, relativ leichten Partikel mitführenden flüssigen Mediums angeordnet ist.

Eine solche Vorrichtung ermöglicht bei baulich einfacher Gestaltung und geringem Platzbedarf eine weitreichend vollständige Feststofftrennung aus einem flüssigen Rohmedium.

## Beschreibung

Die Erfindung betrifft eine Vorrichtung zum Trennen von festen Partikeln aus einem flüssigen Medium, mit einem Behälter, der einen unteren, sich nach unten verjüngenden Abschnitt aufweist, einem Druckrohr, das in dem Behälter angeordnet ist und eine Öffnung zum Ausgeben des flüssigen Mediums aus dem Behälter aufweist, ferner mit einem Prallkörper, der im Bereich der Öffnung angeordnet ist, zum Umlenken des aus der Öffnung austretenden flüssigen Mediums, einem unteren Ausgabebereich unten im Behälter für die festen, relativ schweren Partikel und einem oberen Ausgabebereich oben im Behälter für feste, relativ leichte Partikel und für von festen Partikeln befreites flüssiges Medium.

Eine derartige Vorrichtung ist aus der WO 2007/051640 A1 bekannt. Die dort beschriebene Vorrichtung dient der Behandlung von schlammführenden Abwässern. Die in einer solchen Suspension enthaltenen Feststoffe sind Schlammpartikel. Diese Feststoffbestandteile sollen bei der Abwasserbehandlung von dem Wasser getrennt werden. Insbesondere bei Fallgestaltungen, bei denen Feststoffpartikel eine Dichte haben, die etwas höher, jedoch nahe der Dichte des Wassers liegt, bereitet das Trennen der Schlammpartikel unter der Wirkung der Schwerkraft größere Schwierigkeiten. Im Hinblick auf eine möglichst wirtschaftliche Abwasserbehandlung sollen sich die Schlammpartikel möglichst rasch in einem Bad absetzen und dort kontinuierlich oder diskontinuierlich abgezogen werden, während das um die Schlammpartikel befreite Wasser in dem Bad nach oben und dort kontinuierlich abgezogen werden soll.

Bei der bekannten Vorrichtung wird zu diesem Zweck vorgeschlagen, ein Fallrohr vorzusehen, das in dem Behälter, sich in Längsrichtung des Behälters erstreckend, angeordnet ist und unten eine Öffnung aufweist, zum Einleiten des durch das Fallrohr fallenden Abwasserstroms in den Behälter. Unterhalb der Öffnung des Fallrohrs ist der Prallkörper angeordnet, der dem Umlenken des aus der Öffnung austretenden Abwassers dient. Der Prallkörper bewirkt somit die Ausbildung eines im Wesentlichen kurvenförmigen Strömungsprofils des Abwassers hinter der Öffnung des Rohres. Der Abwasserstrom wird aus der vertikal nach unten gerichteten Ausrichtung nach oben umgelenkt, um innerhalb des Behälters aufzusteigen. Die bogenförmige Beschleunigung des Abwassers kann von den Schlammpartikeln aufgrund der etwas höheren Dichte gegenüber der Dichte des Wassers nicht in gleicher Weise nachvollzogen werden, sodass diese Schlammpartikel unter Schwerkraftwirkung innerhalb des Behälters absinken und sich in dem unteren Bereich desselben ansammeln. Nur im Abwasser mitgeführte Partikel, die gegenüber der Dichte des Wassers relativ leichter sind, werden vom umgelenkten Abwasser mit nach oben genommen und es erfolgt das Ausgeben der festen, relativ leichten Partikel und des von den festen Partikeln befreiten Wassers im oberen Abgabebereich oben im Behälter.

Nachteilig ist bei dieser Vorrichtung, dass dem Abwasser aufgrund des Prallkörpers eine Umlenkrichtung nach oben aufgezwungen wird, die der Absetzrichtung der festen, relativ schweren Partikel entgegengesetzt ist. Dies beeinflusst den Trennvorgang nachteilig. Ferner ist es nachteilig, dass die im Abwasser mitgeführten festen, relativ leichten Partikel ausschließlich unter Einwirkung des im Anschluss an den Prallkörper nach oben strömenden Abwassers nach oben weiter transportiert werden. Hierdurch ergibt sich ein nur unzureichender Wirkungsgrad bei der Trennung der festen Artikel aus dem Abwasser. Durch das Zuführen des Abwassers durch das Rohr von oben ergibt sich überdies ein erhöhter apparativer Aufwand. Aufgabe der vorliegenden Erfindung ist es, eine Vorrichtung der eingangs genannten Art so weiterzubilden, dass bei baulich einfacher Gestaltung und geringem apparativem Aufwand eine verbesserte Trennung von festen Partikeln aus einem diese festen Partikel mitführenden flüssigen Medium gewährleistet ist.

Gelöst wird die Aufgabe durch eine Vorrichtung, die die Merkmale des Patentanspruchs 1 aufweist.

Bei der erfindungsgemäßen Vorrichtung ist somit vorgesehen, dass das Rohr ein Steigrohr ist, das im Bereich eines oberen Endes die Öffnung aufweist, oberhalb der Öffnung der Prallkörper angeordnet ist, sowie oberhalb des Prallkörpers eine Einrichtung zum Belüften des von den festen, relativ schweren Partikeln befreiten, die festen, relativ leichten Partikel mitführenden flüssigen Mediums angeordnet ist.

Bei der erfindungsgemäßen Vorrichtung wird somit das mit den festen Partikeln beladene flüssige Medium, auch als Rohmedium zu bezeichnen, durch die Öffnung im Bereich des oberen Endes des Steigrohrs ausgegeben, womit es das Steigrohr nach oben hin verlässt. Oberhalb dieser Öffnung ist der Prallkörper angeordnet, der in einem solchen Abstand zur Öffnung positioniert ist, dass der Prallkörper geeignet ist, das aus der Öffnung austretende flüssige Medium umzulenken. Hierbei wird unter Prallkörper ein Gegenstand verstanden, der eine zur Umleitung des flüssigen Mediums geeignete Prallfläche ausbildet, die es gestattet, das flüssige Medium so umzulenken, dass es eine Strömungskomponente nach unten aufweist. Aufgrund dieser Umlenkung des flüssigen Mediums werden auch die in diesem mitgeführten Partikel, insbesondere die relativ schweren Partikel nach unten umgelenkt, somit in den unteren, sich nach unten verjüngenden Abschnitt des Behälters. Es werden zwar auch die festen, relativ leichten Partikel entsprechend umgelenkt. Allerdings wird durch die vorgesehene Einrichtung zum Belüften erreicht, dass die festen, relativ leichten Partikel besonders wirksam nach oben aufsteigen bzw. von dem nach oben aufsteigenden flüssigen Medium mitgezogen werden. Die Einrichtung zum Belüften ermöglicht somit das Flotieren der festen, relativ leichten Partikel. Vorzugsweise ist der Behälter derart ausgebildet, dass er einen oberen zylindrischen, insbesondere nach oben offenen Abschnitt und einen sich unten an diesen anschließenden trichterförmigen Abschnitt aufweist. Der zylindrische Abschnitt ist besonders gut für das Abführen des von den festen, relativ schweren Partikeln befreiten flüssigen Mediums geeignet. Hingegen können über den trichterförmigen Abschnitt die festen, relativ leichten Partikel optimal gesammelt werden und über das untere Trichterende abgefördert werden.

Vorzugsweise ist die Längsachse des Behälters vertikal angeordnet. Vorzugsweise ist die Längsachse des Rohres vertikal angeordnet. Die jeweilige vertikale Anordnung hat den Vorteil, dass sie mit der Schwerkraftrichtung bzw. der der Schwerkraftrichtung entgegengesetzten Richtung übereinstimmt.

Der Prallkörper ist vorzugsweise rotationssymmetrisch ausgebildet. Insbesondere ist vorgesehen, dass eine die Rotationssymmetrie bildende Achse des Prallkörpers die Längsachse des Behälters und/oder des Rohrs ist. Durch die rotationssymmetrische Ausbildung des Prallkörpers lässt sich eine weitgehend gleichmäßige Verteilung des flüssigen Mediums sowie der Partikel im Behälter, bezogen auf die rotationssymmetrische Ausbildung des zylindrischen Abschnitts und des trichterförmigen Abschnitts des Behälters erreichen.

Vorteilhaft ist es, wenn der Prallkörper auf seiner der Öffnung des Rohrs zugewandten Seite eine nach innen gerichtete Wölbung aufweist. Diese Gestaltung des Prallkörpers mit der nach innen gerichteten Wölbung gewährleistet ein Umlenken des flüssigen Mediums derart, dass das flüssige Medium mit einer Bewegungskomponente nach unten vom Prallkörper weg strömt.

Es wird als besonders zweckmäßig angesehen, wenn der Prallkörper in einem umlaufenden Abströmbereich des von den festen, relativ schweren Partikeln befreiten flüssigen Mediums eine nach außen gerichtete Wölbung aufweist. Diese Wölbung ist besonders gut geeignet, die Abströmung des flüssigen Mediums mit den festen, relativ leichten Partikeln nach oben, somit zum oberen Ausgabebereich des Behälters zu optimieren.

Vorzugsweise ist die Öffnung des Rohres so gestaltet, dass sie eine Diffusoröffnung aufweist oder das Rohr im Bereich dessen Öffnung eine nach außen gerichtete Wölbung aufweist. Diese Wölbung weist vorzugsweise einen um mehr als 90° umgebogenen Kragen auf. Dieser Kragen kann durchaus bis zu einem Winkel von 180° umgebogen sein.

Durch die Energievernichtung beim Durchgang durch die Öffnung wird die Geschwindigkeit des Rohmediums stark reduziert. Die festen, relativ schweren Partikel trennen sich von den festen, relativ leichten Partikeln durch gravitäre und strömungsdynamische Prozesse ab.

Um das Zusammenwirken von Austrittsstelle des Rohres, somit Öffnung des Rohres und Prallkörper zu optimieren, ist gemäß einer Weiterbildung vorgesehen, dass der Prallkörper vertikal verstellbar im Behälter gelagert ist. Stattdessen oder auch zusätzlich kann das Rohr vertikal verstellbar im Behälter gelagert sein.

Um die Trennergebnisse zu optimieren, wird es als besonders vorteilhaft angesehen, wenn das Rohr ein Hauptstück und ein die Öffnung aufweisendes Endstück aufweist. Hierbei ist das Endstück verschieblich im stationären Hauptstück gelagert, zwecks Veränderung des Abstands der Öffnung zum Prallkörper. Durch diese Möglichkeit der Verschiebung des Endstücks zum Prallkörper lässt sich in Abhängigkeit von dem durch das Rohr tretenden Volumenstrom des flüssigen Mediums das Trennergebnis optimieren.

Auch bezüglich der Einrichtung zum Belüften wird es als vorteilhaft angesehen, wenn diese vertikal verstellbar im Behälter gelagert ist. Somit kann auch der Wirkbeginn der Einrichtung zum Lüften hinsichtlich der Position des Prallkörpers und/oder des Rohres optimiert werden. Die Einrichtung zum Belüften kann mit oder auch unabhängig vom Prellkörper im Behälter, vorzugsweise in dessen zylindrisehen Bereich verschoben bzw. höhenverstellt werden. Grundsätzlich ist es aber ausreichend, die Einrichtung zum Belüften stationär im Behälter zu lagern.

Die Einrichtung zum Belüften ist insbesondere derart gestaltet, dass sie einen Belüftungsring aufweist. Der Belüftungsring ist vorzugsweise horizontal angeordnet.

Um besonders gute Belüftungsergebnisse innerhalb des Behälters zu erzielen, wird es als besonders vorteilhaft angesehen, wenn der Außendurchmesser des Belüftungsrings mindestens 60 %, insbesondere mindestens 75 % des Innendurchmessers des Behälters im Bereich des Belüftungsrings beträgt. Somit ist sichergestellt, dass das aus der Einrichtung zum Belüften austretende Gas nahezu über den gesamten Querschnitt des Behälters wirksam ist, vorzugsweise über den gesamten Querschnitt.

Durch die Einrichtung zum Belüften ist grundsätzlich jegliches Gas ausgebbar, das geeignet ist, das Flotieren der festen, leichteren Partikel zu ermöglichen bzw. zu verbessern, sowie gegebenenfalls das Rohmedium zu behandeln. In aller Regel wird es sich bei diesem Gas um Luft handeln. Auch Ozon kann beispielsweise als Gas verwendet werden.

Die Vorrichtung ist insbesondere derart gestaltet, dass eine externe Gaszufuhr mit der Einrichtung zum Belüften, insbesondere dem Belüftungsring verbunden ist. Insbesondere ist in eine Einrichtung zur Lagerung des Belüftungsrings in dem Behälter die Gaszufuhr integriert.

Baulich besonders einfach ist der Belüftungsring gestaltet, wenn er einen äußeren Ring und mit diesem verbundene Speichen aufweist, die in einem zentralen Bereich des Belüftungsrings gelagert sind. Hierbei ist vorgesehen, dass das Gas im Bereich des Rings und der Speichen ausgegeben wird. Die Einrichtung zum Belüften kann durchaus auch mehrere konzentrisch zueinander angeordnete Ringe aufweisen. Diese Ringe sind bevorzugt mittels Speichen miteinander verbunden.

Im oberen Ausgabebereich der Vorrichtung werden die festen, leichteren Partikel und das von den Partikeln weitgehend gereinigte flüssige Medium ausgegeben. Hierbei wird es als besonders vorteilhaft erachtet, wenn der obere Ausgabebereich eine Tauchwand und/oder eine Skimmereinrichtung zum Abfördern der festen, relativ leichten Partikel aufweist. Ferner wird es als besonders vorteilhaft angesehen, wenn der obere Ausgabebereich eine Tauchwand und/oder ein Überfallwehr aufweist, über die das von den festen Partikeln befreite flüssige Medium aus dem Behälter ausgegeben wird.

Im Zulaufbereich des Rohrs bzw. dem Rohr selbst kann ferner ein Zugang zum Zuführen von Hilfsmitteln, insbesondere chemischen Hilfsmitteln vorgesehen sein, um eine verbesserte Trennleistung der festen Partikel aus dem flüssigen Medium zu erzielen.

Die erfindungsgemäße Vorrichtung nebst deren Weiterbildungen gewährleistet somit selbst dann, wenn im Rohmedium Feststoffpartikel mitgeführt werden, die eine Dichte haben, die nahe der Dichte des Rohmediums liegt, das zuverlässige Trennen der Partikel. Im Hinblick auf eine möglichst wirtschaftliche Trennung können die festen, relativ schweren Partikel und die festen, relativ leichten Partikel schnell und auf engstem Raum getrennt werden, während das um die festen Partikel befreite flüssige Medium nach oben aufsteigt und oben abläuft. Wegen dieser möglichst vollständigen Feststofftrennung aus dem flüssigen Rohmedium ist es möglich, sowohl die Feststoffe als auch das um die Feststoffe gereinigte Medium in einem Kreislauf zu verwenden, eine weitere Behandlung zu entlasten oder ggf. direkt abzuleiten.

Die Vorrichtung kann durchaus auch im Zusammenhang mit einer Containerlösung, somit auf engstem Raum eingesetzt werden. Sie ist aufgrund der Anordnung in einem Container ortsverlagerbar und kann für unterschiedlichste Zwecke eingesetzt werden, beispielsweise zur Entlastung einer Kläranlage.

Weitere Merkmale der Erfindung sind in den Unteransprüchen, der nachfolgenden Beschreibung eines Ausführungsbeispiels, sowie der Darstellung dieses Ausführungsbeispiels veranschaulicht, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels dargestellt, ohne hierauf beschränkt zu sein. Es zeigt:

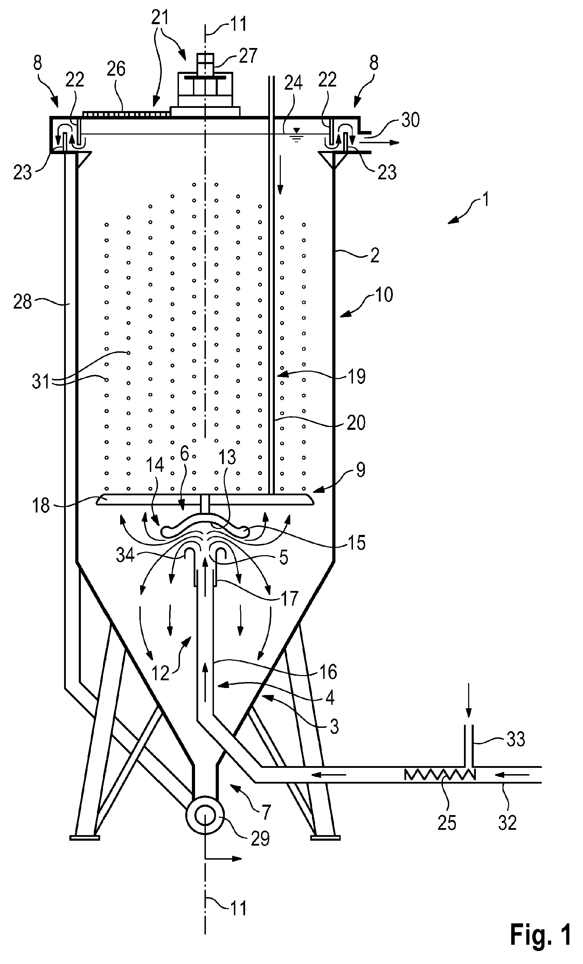

- Fig. 1: eine schematische Darstellung einer Vorrichtung zum Trennen von festen Partikeln aus einem flüssigen Medium.

### Figurenbeschreibung

Veranschaulicht ist eine Vorrichtung 1 zum Trennen von festen Partikeln aus flüssigen Medium. Hierbei handelt es sich beispielsweise um Abwasser aus der fleischverarbeitenden Industrie (für zum Beispiel Fertigprodukte), das relativ schwere feste Bestandteile, wie Teile von Knochen, Muskeln, Fleisch sowie relativ leichte feste Bestandteile, wie Gewebeteilchen, Mark, Fette, Öle enthält. Es handelt sich somit um feste, relativ schwere Partikel und feste, relativ leichte Partikel, bezogen auf das spezifische Gewicht des Wassers.

Die Vorrichtung 1 weist einen Behälter 2 auf, der einen unteren, sich nach unten verjüngenden Abschnitt 3, der als Trichter ausgebildet ist, aufweist. Des Weiteren weist die Vorrichtung 1 ein Rohr 4 auf, das in dem Behälter 2 angeordnet ist. Dieses Rohr 4 weist eine Öffnung 5 zum Ausgeben des flüssigen Mediums bzw. Rohmediums in den Behälter 2 auf. Das flüssige Medium wird durch das Rohr 4 mit Druck gefördert. Die Vorrichtung 1 weist ferner einen Prallkörper 6 auf. Dieser ist im Bereich der Öffnung 5 angeordnet und dient dem Umlenken des aus der Öffnung 5 austretenden flüssigen Mediums. Schließlich weist die Vorrichtung 1 einen unteren Ausgabebereich 7 unten im Behälter 2 für die festen, relativ schweren Partikel und einen oberen Ausgabebereich 8 oben im Behälter 2 für feste, relativ leichte Partikel und für von festen Partikeln befreites flüssiges Medium auf.

Das Rohr 4 ist als Steigrohr ausgebildet. Es weist im Bereich seines oberen Endes die Öffnung 5 auf. Oberhalb der Öffnung 5 ist der Prallkörper 6 angeordnet. Oberhalb des Prallkörpers 6 ist ferner eine Bestandteil der Vorrichtung 1 bildende Einrichtung 9 angeordnet, die dem Belüften des von den festen, relativ schweren Partikeln befreiten, die festen, relativ leichten Partikel mitführenden flüssigen Mediums dient.

Im Detail weist der innen glattwandige Behälter 2 einen oberen zylindrischen Abschnitt 10 auf und den sich unten an diesen anschließenden trichterförmigen Abschnitt 3 auf. Der zylindrische Abschnitt 10 kann hierbei durchaus nach oben offen sein. Eine Längsachse 11 des Behälters 2 sowie eine Längsachse von Rohr 4 und trichterförmigem Abschnitt 3 sind vertikal angeordnet. Diese Längsachse 11 bildet eine gemeinsame Achse mit einem vertikalen Endabschnitt 12 des Rohres 4 innerhalb des Behälters 2. Der Prallkörper 6 ist rotationssymmetrisch ausgebildet und es ist eine die Rotationssymmetrie bildende Achse des Prallkörpers 6 die Längsachse 11.

Der Prallkörper 6 weist auf seiner der Öffnung 5 des Rohres 4 zugewandten Seite eine nach innen gerichtete Wölbung 13 auf. Diese dient dem Umlenken der aus der Öffnung 5 des Rohres 4 austretenden Flüssigkeit, sodass diese dann eine nach unten gerichtete Strömungskomponente aufweist.

Der Prallkörper 6 weist in einem umlaufenden Abströmbereich 14 des von den festen, relativ schweren Partikeln befreiten flüssigen Mediums eine nach außen gerichtete Wölbung 15 bzw. Aufwölbung auf.

Das Rohr 4 ist derart gestaltet, dass es ein Hauptstück 16 und ein die Öffnung 5 aufweisendes Endstück 17 besitzt. Hierbei ist das Endstück 17 verschieblich, aber festlegbar im stationären Hauptstück 16 gelagert, zwecks Veränderung des Abstands der Öffnung 5 zum Prallkörper 6. Das Endstück 17 weist im Bereich der Öffnung 5 eine nach außen gerichtete Wölbung in Art eines um 180° umgebogenen Kragens 34 auf.

Auch der Prallkörper 6 kann, zur Veränderung des Abstands zur Öffnung 5 des Rohres 4 in Richtung der Längsachse 11 verstellbar und festlegbar sein, um die Position des Prallkörpers und damit der Öffnung 5 des Rohres 4 bezüglich der Höhe im Behälter 2 und somit des Übergangs vom zylindrischen Abschnitt 10 zum trichterförmigen Abschnitt 3 beeinflussen zu können.

Eine Einrichtung 9 zum Belüften weist einen Belüftungsring 18 auf, der horizontal und somit senkrecht zur Längsachse 11 angeordnet ist. Der Außendurchmesser des Belüftungsrings beträgt mindestens 60 %, insbesondere mindestens 75 % des Innendurchmessers des zylindrischen Abschnitts 10 des Behälters 2.

Eine externe Gaszufuhr 19, die ein Rohr 20 aufweist, ist im Bereich dieses Rohres 20 mit dem Belüftungsring 18 verbunden. Dieses Rohr 20 oder auch mehrere derartiger Rohre 20 können gleichzeitig der Lagerung des Belüftungsrings 18 dienen. Der Belüftungsring 18 kann gleichfalls in Vertikalrichtung verstellbar sein, um den Wirkbereich der Belüftung optimieren zu können.

Der Belüftungsring 18 weist den eigentlichen kreisförmigen Ring des Belüftungsrings 18, ferner mit diesem Ring verbundene Speichen auf. Der Belüftungsring 18 und damit der Ring ist konzentrisch zur Längsachse 11 angeordnet. Das Gas, vorliegend Luft wird im Bereich des Rings und der Speichen ausgegeben, somit weitreichend über den gesamten Innenquerschnitt des zylindrischen Abschnitts 10 verteilt ausgegeben. Sie steigt bis zu dem Flüssigkeitsspiegel 24 auf.

Der obere Ausgabebereich 8 weist zum Abfördern der festen, relativ leichten Partikel eine Skimmereinrichtung 21 und im Zusammenhang mit dem Abfördern des von den festen Partikeln befreiten flüssigen Mediums aus dem Behälter eine Tauchwand 22 und ein Überfallwehr 23 auf. Über die Skimmereinrichtung 21, konkret den dort befindlichen Skimmer 26, der mittels eines Skimmermotors 27 angetrieben wird, werden die festen, relativ leichten Partikel vor der Tauchwand 22 gesammelt in ein Fallrohr 28 abgefördert, das seitlich am Behälter 2 befestigt ist und unterhalb des unteren Ausgabebereichs 7 in einen Auslass 29 mündet, in den auch der untere Ausgabebereich 7 mündet, von dem aus die festen, relativ schweren Partikel aus dem trichterförmigen Abschnitt 3 ausgegeben werden. Das partikelfreie flüssige Medium, somit Klarwasser gelangt nach Passieren der Tauchwand 22 und des Überfallwehrs 23 in einen Ablauf 30.

Durch die im Anschluss an die Öffnung 5 nach unten gerichteten Pfeildarstellungen ist der grundsätzliche Strömungsweg der absetzbaren Partikel, somit der festen, relativ schweren Partikel veranschaulicht, mit den von der Öffnung 5 nach oben weggehenden Pfeildarstellungen der Strömungsweg der festen, relativ leichten Partikel veranschaulicht. Das vom Belüftungsring 18 aufsteigende Gas, bei dem es sich in aller Regel um Luft handelt, ist durch stilisiert gezeigte Blasen 31 veranschaulicht.

Bei der erfindungsgemäßen Vorrichtung nebst deren Weiterbildungen wird somit das die festen Partikel aufweisende flüssige Medium, somit Rohmedium, über das Rohr mit Öffnung 5 und Gegenstück in Art des Prallkörpers 6 in den Behälter 2 entlassen, und es sammeln sich die relativ schwereren Partikel im unteren Ausgabebereich 7 und die relativ leichteren Partikel im oberen Ausgabebereich 8 des Behälters 2. Die überwiegende Druckenergie des durch das Rohr 4 beförderten Rohmediums wird direkt beim Entlassen des Rohmediums aus dem Rohr 4, somit Entlassen in das im Behälter 2 befindliche Medium, vernichtet. Da der Öffnung 5 der Prallkörper 6 gegenübergestellt ist, wird das Rohmedium umgelenkt. Die Trennung der festen, relativ leichten Partikel wird über die Einrichtung 9 zum Belüften forciert.

Zusätzlich veranschaulicht ist in einem mit dem Rohr 4 verbundenen Zulaufrohr 32 für das Rohmedium ein Anschluss 33 zum Zulaufrohr 32. Durch diesen Anschluss 33 lassen sich optional chemische Hilfsmittel dem Rohmedium zumischen, um eine verbesserte Trennleistung der festen Partikel aus dem flüssigen Medium zu erzielen. Stromabwärts des Anschlusses 33 ist hierzu in das Zulaufrohr 32 ein Mischer 25 integriert.

### Bezugszeichenliste

- 1: Vorrichtung
- 2: Behälter
- 3: verjüngter Abschnitt
- 4: Rohr
- 5: Öffnung
- 6: Prallkörper
- 7: unterer Ausgabebereich
- 8: oberer Ausgabebereich
- 9: Einrichtung
- 10: zylindrischer Abschnitt
- 11: Längsachse
- 12: Endabschnitt
- 13: Wölbung
- 14: Abströmbereich
- 15: Wölbung
- 16: Hauptstück
- 17: Endstück
- 18: Belüftungsring
- 19: Gaszufuhr
- 20: Rohr
- 21: Skimmereinrichtung
- 22: Tauchwand
- 23: Überfallwehr
- 24: Flüssigkeitsspiegel
- 25: Mischer
- 26: Skimmer
- 27: Skimmermotor
- 28: Fallrohr
- 29: Auslass
- 30: Ablauf
- 31: Blase
- 32: Zulaufrohr
- 33: Anschluss
- 34: Kragen

## Patentansprüche

1. Vorrichtung (1) zum Trennen von festen Partikeln aus einem flüssigen Medium, mit einem Behälter (2), der einen unteren, sich nach unten verjüngenden Abschnitt (3) aufweist, einem Rohr (4), das in dem Behälter (2) angeordnet ist und eine Öffnung (5) zum Ausgeben des flüssigen Mediums in den Behälter (2) aufweist, einem Prallkörper (6), der im Bereich der Öffnung (5) angeordnet ist, zum Umlenken des aus der Öffnung (5) austretenden flüssigen Mediums, einem unteren Ausgabebereich (7) unten im Behälter (2) für die festen, relativ schweren Partikel und einem oberen Ausgabebereich (8) oben im Behälter (2) für feste, relativ leichte Partikel und für von festen Partikeln befreites flüssiges Medium, **dadurch gekennzeichnet, dass** das Rohr (4) ein Steigrohr ist, das im Bereich eines oberen Endes die Öffnung (5) aufweist, oberhalb der Öffnung (5) der Prallkörper (6) angeordnet ist, sowie oberhalb des Prallkörpers (6) eine Einrichtung (9) zum Belüften des von den festen, relativ schweren Partikeln befreiten, die festen, relativ leichten Partikel mitführenden flüssigen Mediums angeordnet ist.

2. Vorrichtung nach Anspruch 1, **dadurch gekennzeichnet, dass** der Behälter (2) einen oberen zylindrischen, insbesondere nach oben offenen Abschnitt (10) und einen sich unten an diesen anschließenden trichterförmigen Abschnitt (3) aufweist.

3. Vorrichtung nach Anspruch 1 oder 2, **dadurch gekennzeichnet, dass** eine Längsachse (11) des Behälters (2) vertikal angeordnet ist und/oder eine Längsachse (11) des Rohrs (4) vertikal angeordnet ist.

4. Vorrichtung nach einem der Ansprüche 1 bis 3, **dadurch gekennzeichnet, dass** der Prallkörper (6) rotationssymmetrisch ausgebildet ist, insbesondere eine die Rotationssymmetrie bildende Achse des Prallkörpers (6) die Längsachse (11) von Behälter (2) und/oder Rohr (4) ist.

5. Vorrichtung nach einem der Ansprüche 1 bis 4, **dadurch gekennzeichnet, dass** der Prallkörper (6) auf seiner der Öffnung (5) des Rohrs (4) zugewandten Seite eine nach innen gerichtete Wölbung (13) aufweist.

6. Vorrichtung nach einem der Ansprüche 1 bis 5, **dadurch gekennzeichnet, dass** der Prallkörper (6) in einem umlaufenden Abströmbereich (14) des von den festen, relativ schweren Partikeln befreiten flüssigen Mediums eine nach außen gerichtete Wölbung (15) aufweist.

7. Vorrichtung nach einem der Ansprüche 1 bis 6, **dadurch gekennzeichnet, dass** das Rohr (4) ein Hauptstück (16) und ein die Öffnung (5) aufweisendes Endstück (17) aufweist, wobei das Endstück (17) verschieblich im stationären Hauptstück (16) gelagert ist, zwecks Veränderung des Abstands der Öffnung (5) zum Prallkörper hin (6).

8. Vorrichtung nach einem der Ansprüche 1 bis 7, **dadurch gekennzeichnet, dass** das Rohr (4) eine Diffusoröffnung aufweist oder das Rohr (4) im Bereich dessen Öffnung (5) eine nach außen gerichtete Wölbung, insbesondere einen um mehr als 90°, insbesondere bis zu 180° umgebogenen Kragen (34) aufweist.

9. Vorrichtung nach einem der Ansprüche 1 bis 8, **dadurch gekennzeichnet, dass** der Prallkörper (6) und/oder die Einrichtung (9) zum Belüften stationär im Behälter (2) gelagert ist bzw. sind oder vertikal verstellbar im Behälter (2) gelagert ist bzw. sind.

10. Vorrichtung nach einem der Ansprüche 1 bis 9, **dadurch gekennzeichnet, dass** die Einrichtung (9) zum Belüften einen Belüftungsring (18), insbesondere einen horizontal angeordneten Belüftungsring (18) aufweist.

11. Vorrichtung nach Anspruch 10, **dadurch gekennzeichnet, dass** der Außendurchmesser des Belüftungsrings (18) mindestens 60 %, insbesondere mindestens 75 % des Innendurchmessers des Behälters (2) im Bereich des Belüftungsrings (18) beträgt.

12. Vorrichtung nach einem der Ansprüche 1 bis 11, **dadurch gekennzeichnet, dass** eine externe Gaszufuhr (19) mit dem Belüftungsring (18) verbunden ist, insbesondere in eine Einrichtung zur Lagerung des Belüftungsrings (18) in dem Behälter (2) die externe Gaszufuhr (19) integriert ist.

13. Vorrichtung nach einem der Ansprüche 10 bis 12, **dadurch gekennzeichnet, dass** der Belüftungsring (18) einen äußeren Ring und mit diesem verbundene Speichen aufweist, die in einem zentralen Bereich des gelagert sind, wobei das Gas im Bereich des Rings und der Speichen ausgebbar ist.

14. Vorrichtung nach einem der Ansprüche 1 bis 13, **dadurch gekennzeichnet, dass** der obere Ausgabebereich (8) eine Tauchwand (22) und/oder ein Überfallwehr (23) aufweist, über das bzw. die das von den festen Partikeln befreite flüssige Medium aus dem Behälter (2) ausgegeben wird.

15. Vorrichtung nach einem der Ansprüche 1 bis 14, **dadurch gekennzeichnet, dass** der obere Ausgabebereich (8) eine Skimmereinrichtung (21) zum Abfördern der festen, relativ leichten Partikel aufweist.
